# EUROPEAN PATENT APPLICATION

(11) **EP 3 189 942 A1**
(43) Date of publication of application: **12.07.2017**
(21) Application number: 17150709.8
(22) Date of filing: 09.01.2017
(51) Int. Cl.: B25F 5/02, G05B 19/048

(54) **POWER TOOL SYSTEM**

(30) Priority: 09.01.2016 CN 201610013236; 04.03.2016 CN 201610126467
(71) Applicant: Chervon (HK) Limited, 999077 Hong Kong (CN)
(72) Inventor: CHEN, Wu, Nanjing 211106 (CN); NI, Guigong, Nanjing 211106 (CN)
(74) Representative: Sun, Yiming

(57) **Abstract**

A power tool system with a separate data processing or displaying equipment is provided. The power tool system comprises a power tool, a detection device; a store device; a transceiver; a controller, capable of being in data communication with at least one of the detection device, the store device and the transceiver, and a wireless data retrieval and/or process sub-system adapted for receipt of data from the transceiver and/or transmission of control command to the transceiver, wherein the wireless data retrieval and/or process sub-system includes a data process or display equipment independent of the power tool and configured to be remotely removed away from the power tool so as to have a separate and/or remote equipment for processing or displaying a select data from the power tool or the power tools on the data process or display equipment.

## Description

This application claims the benefit of CN 201610013236.8, filed on Jan. 9, 2016, and CN 201610126467.X, filed on Mar. 4, 2016, the disclosures of which are incorporated herein by reference in their entirety.

### FIELD OF THE DISCLOSURE

The present disclosure relates generally to power tools, and more particularly to a system for power tools.

### BACKGROUND OF THE DISCLOSURE

With the development of network and application of mobile equipments popular in our daily life, a number of objects are linked by a communication link or network to share information therebetween. This will be changing peoples' life environment.

In the field of power tools, the power tools can be used more efficiently if the internal performance information of the power tool is obtained by the external mobile equipment or another power tool linked to the power tool. The performance information of the power tool will also help the user to enable a personal control suitable for the respective power tool, and to diagnose problems with the power tools or to perform preventative maintenance before problems arise. The above-described is important for the power tool to be later developed and improved.

The statements in this section merely provide background information related to the present disclosure and may not constitute prior art.

### SUMMARY

In one aspect of the disclosure, a power tool system comprising a power tool including a motor thereof; a detection device for detecting performance parameters of said power tool; a store device for storing data corresponding to performance parameters of the power tool; a transceiver for transmitting data corresponding to performance parameters of the power tool; a controller, capable of being in data communication with at least one of the detection device, the store device and the transceiver; a wireless data retrieval and/or process sub-system adapted for receipt of data from the transceiver and/or transmission of control command to the transceiver; wherein the wireless data retrieval and/or process sub-system includes a data process equipment independent of the power tool and configured to be remotely removed away from the power tool so as to have a separate and/or remote equipment for processing a select data from the power tool or the power tools on the data process equipment.

In another aspect of the disclosure, a power tool system, comprising: a power tool; a power device for powering the power tool; a detection device for detecting performance parameters of the power device; a store device for storing data corresponding to performance parameters of the power device; a source-based transceiver for at least transmitting data corresponding to performance parameters of the power device; a controller, capable of being in data communication with at least one of the detection device, the store device and the transceiver; a wireless data retrieval and/or process sub-system adapted for receipt of data from the transceiver and/or transmission of control command to the transceiver; wherein the wireless data retrieval and/or process sub-system includes a data display equipment independent of the power tool and configured to be remotely removed away from the power tool so as to have a separate and/or remote equipment for displaying a select power data from the power tool or the power tools on the data display equipment.

Further areas of applicability will become apparent from the description provided herein. It should be understood that the description and specific examples are intended for purposes of illustration only and are not intended to limit the scope of the present disclosure.

Usefulness of the present invention is : the power tool can be balance power by the mulit-battery packs

### BRIEF DESCRIPTION OF THE DRAWINGS

FIG. 1 illustrates a first embodiment of a power tool system.
FIG. 2 illustrates a second embodiment of a power tool system.
FIG. 3 illustrates a third embodiment of a power tool system.
FIG. 4 illustrates another embodiment of a power tool system.
FIG. 5 illustrates another embodiment of a power tool system.
FIG. 6 illustrates another embodiment of a power tool system.
FIG. 7 illustrates a preferred embodiment of a battery package in the power tool system of FIG. 4.
FIG. 8 shows a display part separated from the battery package of FIG. 7.
FIG. 9 shows an embodiment of a wear equipment of FIG.7.
FIG. 10 is a block diagram of an embodiment of the power tool system.

The drawings described herein are for illustrative purposes only of exemplary embodiments and not all possible implementations, and are not intended to limit the scope of the present disclosure. Corresponding reference numerals indicate corresponding parts throughout the several views of the drawings.

### DETAILED DESCRIPTION

The following description of the preferred embodiments is merely exemplary in nature and is in no way intended to limit the invention, its application, or uses.

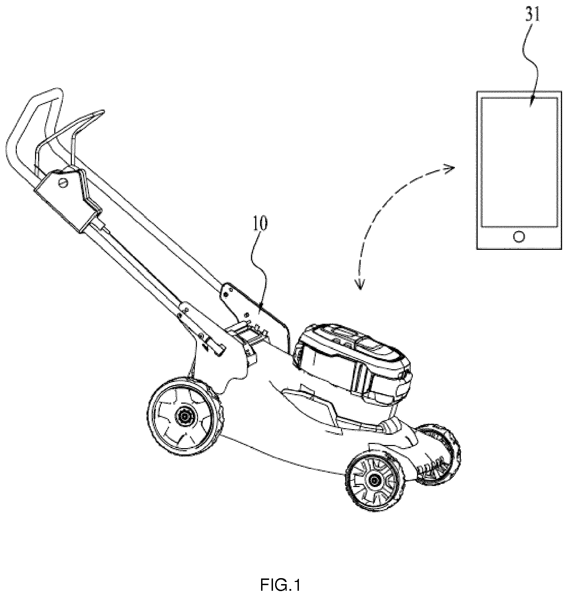

FIG. 1 is shown a preferred power tool system. The power tool system includes a moveable power tool 10 such as a grass cutter, and a mobile device such as a handset 31. Preferably, the grass cutter 10 may include at least a battery pack having a plurality of batteries adapted for powering the power tool. In the present embodiments of Fig.1, the grass cutter 10 includes a detection device, a store device, a transceiver, and a controller therein.

The detection device is for detecting of the grass cutter 10 performance parameters refer to any parameters effect a desired function of the grass cutter 10. The performance parameters preferably include hardware parameters corresponding to hardware characteristics of the tool itself, such as types of power tools, usage purposes of power tools, factory dates of the power tools, and types of battery suitable for the associated power tools. By obtaining hardware parameters of the power tools via a wireless link or network, operators can recognize and/or manage different power tools by an electronic way, even at a location remote from the grass cutter 10. In an alternative embodiment, the performance parameters also include operational parameters the components of the grass cutter 10 or the grass cutter 10 generates when the operator uses the grass cutter 10. The operational parameters correspond to a rotation speed, a rotation direction, a rotation angle of a driven motor, and/or the remaining power the battery pack has.

The store device is used for storing data corresponding to performance parameters of the grass cutter 10, and the transceiver is for transmitting data corresponding to performance parameters of the power tool, as well as for receipt of data from the external device such as an external transceiver, via a wireless or hardwired communication. The controller is operable to control the operation of the grass cutter 10, and is capable of being in data communication with at least one of the detection device, the store device and the transceiver so as to perform a desired function of the grass cutter more efficiently by using the data directly or indirectly from the detection device, the store device or the transceiver.

The wireless data retrieval and/or process sub-system includes a data process equipment independent of the power tool such as grass cutter 10, and configured to be remotely removed away from the power tool. Preferably, the data process equipment is a mobile device in form of a handset or a computer, or any other device that can be in data transmission with an external equipment via a mobile network.

FIG. 1 depicts the preferred power tool system having a wireless data retrieval and/or process sub-system such as a mobile handset 31, adapted for receipt of data from the internal transceiver and/or transmission of control command to the internal transceiver of the grass cutter 10.

In alternative embodiments, the wireless data retrieval and/or process sub-system may include mobile terminals or parts different from the mobile handset and act as accessories separately and remotely connected to the power tool or grass cutter 10. The accessories are custom-made to be suitable for special customs. The remote data process and control of the power tools can be achieved by in predetermined remote locations respective mobile terminals for processing, controlling and/or displaying a select data thereon.

In an embodiment, the wireless data retrieval and/or process sub-system includes a data process unit and a transmitting unit in data link therebetween. The data process unit and the transmitting unit may be included within separate mobile terminals, and be in data communication therebetween in some situation.

As noted here, the wireless data retrieval and/or process sub-system may include a plurality of data retrieval and process parts or terminals for processing, controlling and/or displaying a select data from the power tool or tools on a predetermined location which may be adjacent to the power tool and/or remote from the power tool. The data retrieval and process parts or terminals are in data communication with a select transceiver of the power tool or tools 10 so as to perform a desired function of the power tool or tools more efficiently and/or further evaluate how the grass cutter 10 is being driven.

In one embodiment, the grass cutter 10 includes the motor, a motor shaft driven by the motor, and a plurality of cutter blades associated with the motor shaft. The motor is configured for driving the cutter blades to rotate with respect to the motor shaft. The detection device includes a motor sensor for measuring performance parameters of the motor shaft as the motor shaft rotates by the motor so as to monitor the operation state of the motor. Specially, such performance parameters detected by the detection device and transmitted to the mobile handset 31, include parameters such as rotation speeds, rotation directions, rotation angles of the driven motor shaft, and/or duration time the rotate of the motor shaft maintains.

The present wireless data retrieval and/or process sub-system includes data processing terminals or parts for receipt of data corresponding to internal performance parameters of the motor shaft or motor for processing and/or analyzing data so as to have a better control of the power tool by modifying the operation state of the motor shaft or motor.

In another embodiment, the grass cutter 10 includes an identifier for generating an identification code corresponding to a select performance parameter of the grass cutter 10. The data process terminal or equipment can be configured to recognize the performance parameters of the grass cutter 10 by the corresponding identification codes.

The performance parameters, detected by the detection device and further recognized by the identifier, include parameters such as types of power tools, usage purposes of power tools, factory dates of power tools, and types of battery packs suitable for the associated power tools.

In another embodiment, the detection device includes a position sensor for sensing a position of the grass cutter 10 relative to a select point or a global position of the grass cutter 10, and for monitoring position variables of the grass cutter 10. Therefore, the performance parameters including positions and/or position variables associated with the grass cutter 10 are detected by the sensor so as to permit the user to control the movement of the grass cutter 10 by the position information.

Specially, the internal controller of the grass cutter 10 is activated by the wireless data retrieval and/or process sub-system such as a mobile handset, and configured to enable the internal transceiver to transmit to the wireless data retrieval and/or process sub-system the data corresponding to the position of the power tool 10. Thus, by viewing the mobile handset, the position of the grass cutter 10 is obtained by the user at a display panel of the mobile handset remote from the grass cutter 10.

Perferably, the data process equipment is a mobile device in form of a handset or a computer, and configured to be in data communication with the transceiver of the grass cutter 10 via a select one from a group of Bluetooth, Zig Bee, Wi-Fi and NFC protocols. In an alternative embodiment, the data process equipment may be a device that can be in data transmission with a similar mobile equipment via a network, or any other equipments via a wireless or hardwired communication. It should be noted that the wireless data retrieval and/or process sub-system may include a plurality of data process equipments or terminals via a wireless or hardwired communication for processing, controlling and/or displaying a select data from the power tool or tools on a predetermined location which may be adjacent to the power tool and/or remote from the power tool.

In an embodiment, the grass cutter 10 includes an operating element for starting the motor or the grass cutter 10 for the user, an operating sensor for sensing the operation state of the operating element, and a power detection device for detecting the power state of the battery pack. When the user starts the grass cutter 10 by the operating element, the operating sensor upon sensing the start state of the motor, triggers the controller to cause the power detecting device to detect the power state of the battery pack and to decide whether to start the motor of the grass cutter 10 depending on the current power state of the battery pack of the grass cutter 10.

In an embodiment, the wireless data retrieval and/or process sub-system is provided with a data display equipment or unit having a display interface and/or touch interface for displaying performance information of the power tool or tools, and/or for control of the power tool or tools by touch of the touch interface. In alternative embodiment, the wireless data retrieval and/or process sub-system is provided with a plurality of data display units or parts for displaying a selected data on the different data display units or parts as needed. The data display unit or part is either in motion or stationary in different usage states.

In an alternative embodiment, the detection device includes a current detection unit or device for measuring the current of the motor. The data retrieval and/or process sub-system or data process equipment such as a mobile handset 31 is for receipt of data corresponding to the associate current parameters of the motor, and may be further to analyze the current data so as to monitor the operation states of the motor by the user.

The associate current parameters as detected by the current detection device include current values of the motor, current variables of the motor, and/or duration time that the current of the motor maintains. Preferably, the data retrieval and/or process sub-system is used to analyze the current data of the motor by employing the frequency analysis, and further to obtain the remaining power of the battery pack by calculating electric energy consumed by the motor through integration of the data results from frequency analysis.

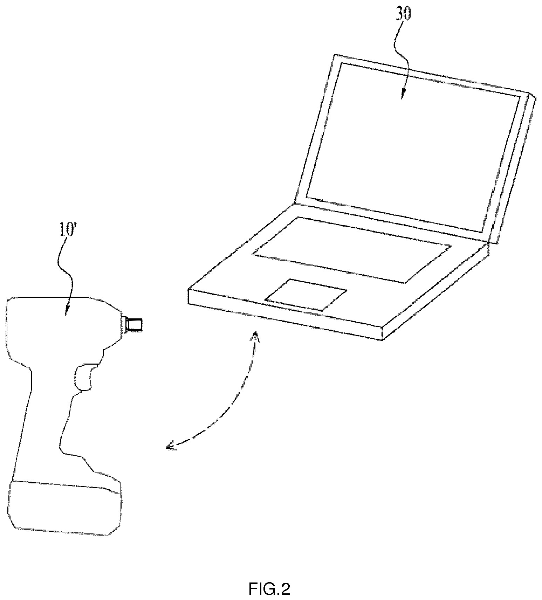

Fig.2 depicts an embodiment of a second power tool system. The second power tool system of Fig.2 preferably includes a drill 10' having a motor, a battery pack, a motor shaft, a detection device, a store device, a transceiver and a controller thereof, and a notebook 30 having a data process unit and a transmitting unit in data communication therebetween.

Different from the power tool of Fig.1, the drill 10' is configured to have operation modes or processes pre-stored within the store device of the drill 10' before the user buys the drill 10'. The operation modes or processes herein stored in the drill 10' refer to any predetermined mode or process for the drill 10' to work under a predetermined working condition. In an embodiment, the operation modes or processes are set to be adapted for of the drilled objects different material including wood, metal, plastic and etc. The first operation mode or process corresponds to the material of wood, the second operation mode or process corresponds to the material of metal, and the third operation mode or process corresponds to the material of plastic. In addition, each material has a predetermined torque limit, and the corresponding operation mode to the select material is set to stop the drive of the power tool if the actual torque exceeds over the torque limit of the material.

In an alternative embodiment, the user can select and/or modify the predetermined or suitable operation mode or process on the interface of the notebook 30 linked to the drill 10' via a wireless communication. Of course, the user can select and and/or modify the suitable operation mode or process on any other portable or mobile terminals in data linked with the drill 10' via a wireless or hardwired communication.

In an embodiment, the drill 10' transmits data corresponding to the present performance parameters of the drill 10' via a wireless link to the notebook 30, which remotely compares the received data with a predetermined data and determines when to stop or adjust the motor of the drill 10' as the unexpected arises.

Alternatively, the drill 10' stores a specification or instruction in an electronic format by the store device, and the notebook 30 reads from the drill 10' the electronic specification to be displayed on the display interface of the notebook 30 for the view by the user. In a preferred embodiment, the drill 10' is supposed to be at a remote location away from the notebook 30 which is being wirelessly linked to the drill 10'. A command is sent from the drill 10 ' or the notebook 30 to prompt the user whether to view the instruction. If the user selects to view, the controller of the drill 10' reads the instruction and to enable the instruction to be uploaded to the notebook 30, or the notebook 30 directly reads the instruction in the store device via the communication device. It should be noted the instruction of the drill 10' can be read from the notebook or any terminals directly or indirectly linked to the drill 10' or the notebook via a wireless or hardwired communication.

In an alternative embodiment, the notebook 30 may download the latest instruction or specification or a website address associate therewith via the network, and then transmit it to the drill 10' by a wireless communication and store it in the store device or memory of the drill 10 '.

In another embodiment, the drill 10' has operation or control processes, which are stored in the store device and set for controlling the operation of the drill 10'. The notebook 30 reads and modifies the stored control processes by which the notebook 30 remotely controls the drill 10' via a wireless communication. The modification of the control processes may be done on the notebook 30 and then the modified processes are controlled to be stored in the store device of the drills, or be directly done within the store device on the drill 10'.

Alternatively, the user obtains the newly-updated process or processes by the notebook 20', and is authorized to update the corresponding old process or processes within the drill 10'. An indicator is provided on the drill 10' or the notebook 30 for indicating a newly-updated processes or instruction that can be obtained by the notebook 30, which sends a signal to lighten the indicator of the drill 10', the notebook 30 or any other terminals wirelessly linked to the drill 10'. It should be noted the indicator may be provided on the drill 10' itself or any other terminals wirelessly linked to the drill 10', and the newly-updated process or processes may be stored on the drill 10' itself, or directly or indirectly stored on the notebook 30 or the terminals wirelessly linked to the drill 10'.

In an alternative embodiment, the drill 10' stores predetermined performance parameters within the store device. The controller of the drill 10' or the notebook 30 compares a detected parameter as detected by the detection device, with a predetermined parameter and determines whether the drill 10' has failed, and the failure of the drill 10' is then signaled to the notebook 30 remotely linked to the drill 10' so as to permit the user to view the failure directly from the notebook 30. It should be noted the failure can be viewed by either the drill 10' or any other terminal wirelessly linked to the drill 10' or the notebook 30, and the compare and/or determination work can be done by either the drill 10' or any other terminal or a select terminal wirelessly linked to the drill 10'.

In other embodiments, the detection device may include a vibration sensor, a noise sensor, a position sensor, and/or a motor sensor used for detecting different performance parameters of the drill 10'. Of course, the combination of select different performance parameters can be employed to help the user to determine the failure.

In an embodiment, the detection device includes a position sensor for sensing a position of the power tool relative to a select point, for monitoring position variables and/or accelerations of the power tool. The performance parameters as detected includes of the drill 10' positions, position variables and accelerations by which the notebook 30 compares with the corresponding predetermined parameters to judge whether the drill 10' has dropped so as to inform the user the failure and/or maintenance of the drill 10'.

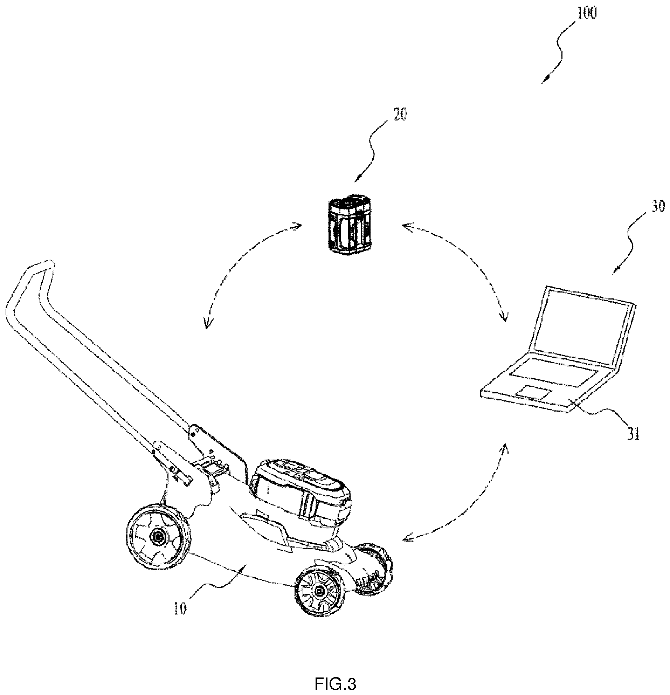

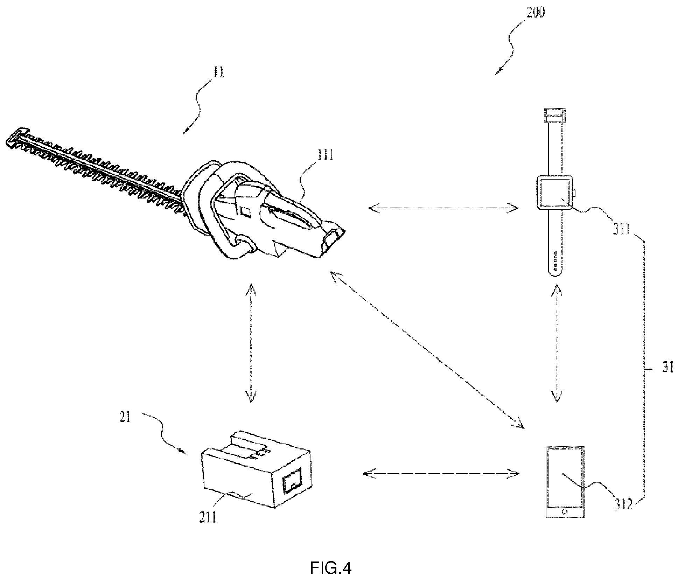

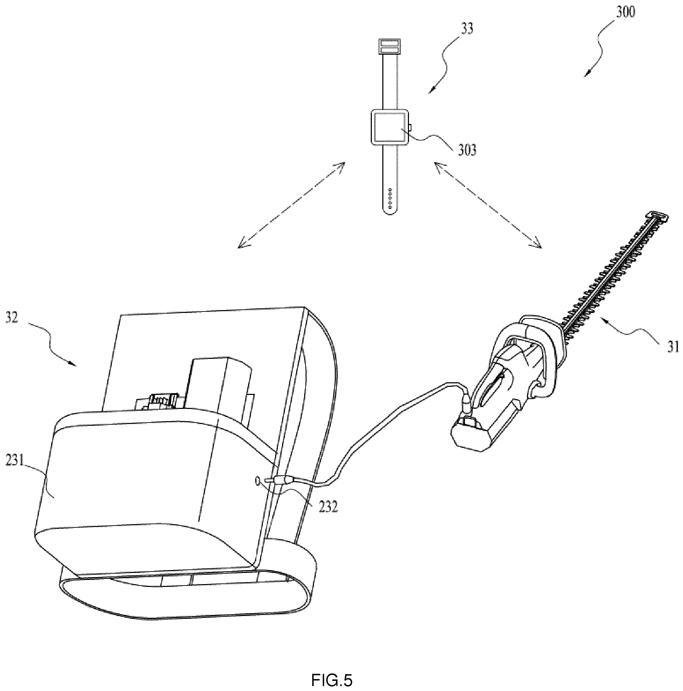

The power tool system of Fig.3 includes a grass cutter 10, a battery pack 20 and a data retrieval and/or process sub-system 30 adapted for receipt of data from a transceiver either in the grass cutter or in the battery pack 10 and/or transmission of control command to the grass cutter 10 or of the battery pack 10. The data retrieval and/or process sub-system 30 may include a notebook 30 of Fig.1, a wrist-watches 311 and a handsets 312 of Fig.4, or a single wrist-watches 33 of Fig.5 with thereof at least one data display or process equipment for displaying or processing data corresponding to performance parameters of the battery pack 20 and/or the grass cutter 10.

The present power tool system includes a power tool, a power device, a detection device, a store device, a source-based transceiver, a controller and a wireless data retrieval and/or process sub-system. In an embodiment, the power tool includes a housing thereof, at least one of the detection device, the store device, the source-based transceiver and the controller is disposed within the housing of the power tool. In an alternative embodiment, the power device includes a battery and a battery case for receiving the battery, at least one of the detection device, the source transceiver and the controller is disposed within the case of the power device. It should be noted that the detection device, the store device, the source-based transceiver and/or the controller may be included within the power tool or the power device or both of the power tool and the power device.

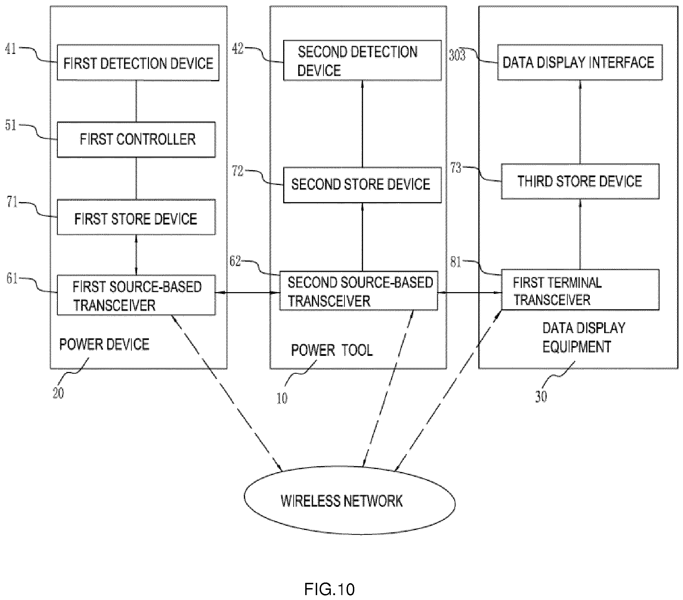

In an embodiment of Fig. 10, the battery pack 20 includes a first detection device 41, a first store device 71, a first source-based transceiver 61 and a first controller 51.

The first detection device 41 is configured for detecting performance parameters of the battery pack 20. The performance parameters of the battery pack 20 refer to any parameter including types of battery packs, temperatures of the battery pack and/or remaining power the battery pack has. The first store device 71 is a device for storing data corresponding to performance parameters of the battery pack 20.

The first source-based transceiver 61 is for at least transmitting data corresponding to performance parameters of the battery pack 20 thereto and/or receipt for data from another terminal in data link to the first transceiver 61 of the battery pack 20 via a wireless or hardwired communication. In an embodiment of Fig.10, the first transceiver 61 of the battery pack 20 is set to be in data communication with either the second transceiver 62 of the grass cutter 10 or the data retrieval and/or process sub-system 30 if needed. It should be noted the first transceiver can be transmitted data corresponding to performance parameters of the battery pack 20 to any other data-linked terminals except for the grass cutter 10 and the data retrieval and/or process sub-system 30 such as a handsets 312 of Fig.4 and/or wrist-watch 303 of Fig. 5.

The first controller 51 is for controlling the power operation of the battery pack 20. In order to control the battery pack 20 efficiently, the first controller 51 is configured to be in data communication with at least one of the first detection device 41, the first store device 71 and the first source-based transceiver 61 via a wireless or hardwired link. In an embodiment, the first controller 51 may be activated by the data retrieval and/or process sub-system 30 such as a handsets 312 or wrist-watch 311, 303 to enable data corresponding to performance parameters such as temperature of the battery pack 20 and/or the remaining power the battery pack 20 has, from the first source-based transceiver 61 to be transmitted to the data retrieval and/or process sub-system 30 in a form of a handsets 312 and/or wrist-watch 303.

As shown in Fig. 10, the grass cutter 10 includes a second detection device 42, a second store device 72, and a second source-based transceiver 62.

The second detection device 42 is for detecting of the grass cutter 10 performance parameters including any parameter refers to types of grass cutters, usage purposes of grass cutters, factory dates of grass cutters, and types of battery suitable for the associated grass cutter, a rotation speed of a driven motor, or the remaining power the battery pack 20 has, and etc..

The second store device 72 is a device for storing data corresponding to performance parameters of the grass cutter 10. The second source-based transceiver 62 is for transmitting data corresponding to performance parameters of the grass cutter 10 thereto and/or receipt for data from the data retrieval and/or process sub-system 30 having a data display or process equipment thereof.

In an alternative embodiment, the grass cutter 10 also includes a second controller being in data communication with at least one of the second detection device 42, the second store device 72 and the second source-based transceiver 62 preferably via a wireless or link.

In an embodiment of FIG.3, the wireless data retrieval and/or process sub-system 30 in a form of a notebook, includes at least one data display or process equipment independent of the grass cutter 10, and configured to be remotely removed away from the grass cutter 10. The data retrieval and/or process sub-system 30 as shown in Fig. 10 includes a first terminal transceiver 81, a first display part 303 and a third store device 73. In a preferred embodiment, the wireless data retrieval and/or process sub-system 30 includes a center controller for controlling a select data to be displayed on a certain display unit or part thereof. In an embodiment, the first terminal transceiver 81 may be set for receipt of a select data of the grass cutter 10 and/or the battery pack 20 from the first source-based transceiver 61 and/or the second source-based transceiver 62, and/or to transmit a command signal to the first source-based transceiver 61 and/or the second source-based transceiver 62 linked to the first terminal transceiver 81 via a wireless or hardwired communication. In an alternative embodiment, the first display part 303 and the first terminal transceiver 81 may be separate parts, or integrated in a device, and the first terminal transceiver 81 configured for receipt of data from the first source-based transceiver 61 and/or the second source-based transceiver 62 and to be controlled to enable the data to be displayed on the first display part 303 of the data retrieval and/or process sub-system 30.

In an embodiment of Fig.4, the power tool system 200 includes a hedge trimmer 11, a battery pack 21, and a data retrieval and/or process sub-system 30 having data retrieval and process terminals such as a wrist-watch 311 and/or a handset 312.

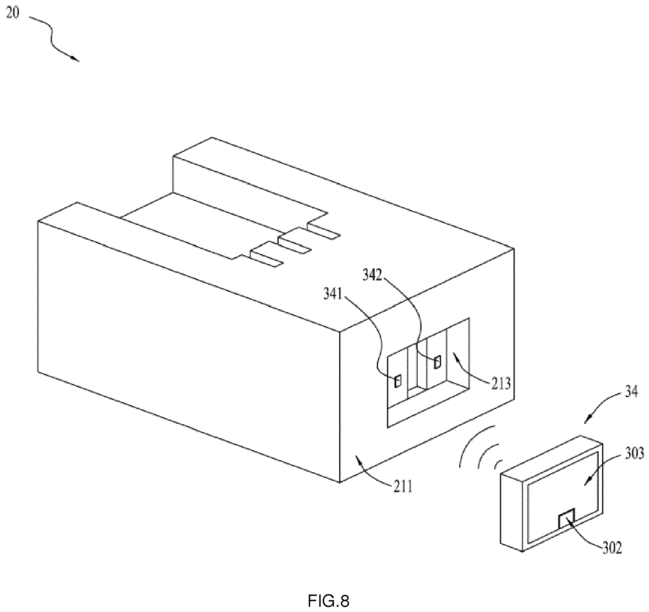

In an alternative embodiment, each data retrieval and process terminal may include a data display or process equipment or a plurality of data display units or parts for displaying a selected data on the different data display units or parts as needed. In one embodiment, a select display part is either in motion or stationary in different usage states. For example, a select data display part is configured to be removably attached to the power device or the power tool so as to set the data display part in stationary, while a certain data display part is capable of being remotely removed away from the power device or the power tool to a remote location for consideration of permitting the display part in motion. In a preferred embodiment, the data display part in stationary is an accessory separately affixed to the power tool or the power device as shown in Fig. 4 and Fig.6 to Fig.8, while a certain display part in motion is a display screen of a mobile device in form of a wrist-watch 311 and a handset 312 of Fig.4 or of a notebook 30 of Fig.3. The accessory is custom-made to be suitable for special customs and different from the display screen of the mobile device or the notebook.

Fig.4 shows an embodiment of the present wireless data retrieval and/or process sub-system 30 having data retrieval and process terminals of the wrist-watch 311 and the handset 312. Referring to Fig.4 and Fig.10, the wrist-watch 311 is mounted on a wrist side of the user and to have a first display unit 303 and a first terminal transceiver 81 included therein. Meanwhile, the handset 312 is operable to have a second display unit 303 and a second terminal transceiver 82 thereon. Alternatively, the handset 312 terminal or the wrist-watch 311 terminal is configured to have a display unit 303 and a separate data display part (not labeled) removably attached to the battery pack 21 or the hedge trimmer 11. In an embodiment, the data display part (not labeled) on the battery pack 21 may be merely in data communication with the battery pack 21 or the hedge trimmer 11.

In Fig.4 and Fig.10, the first terminal transceiver 81 as included in the wrist-watch 311 is to be in data communication with the first source transceiver 61, and the second terminal transceiver 81 as included in the handset 312 is operatively linked to the first source transceiver 61 to permit the data communication therebetween. In some embodiments, the first terminal transceiver 81 and the second terminal transceiver 82 may be set to communicate therebetween over a wireless link or network employing wires, optical fibers, radio links, infrared links or the like. The display unit 311, 312 or part of the terminal permits the data obtained by the first terminal transceiver 81 and/or the second terminal transceiver 82 to be selectively displayed on the display unit 311,312 and/or part for view by the user.

Fig. 5 shows a power tool system including a hedge trimmer 31, a portable battery pack 32, and a data retrieval and/or process sub-system 30 having a data retrieval and process terminal of a wrist-watch 33.

The hedge trimmer 31 has a structure similar to the hedge trimmer 11 of Fig. 4, and includes a second detection device 42, a second store device 72, a second source-based transceiver 62 and a second controller 52. In an alternative embodiment, the portable battery pack 23 is linked to the hedge trimmer 31 through a power port 232 by which the second detection device 42 of the hedge trimmer 31 detects the remaining power the battery pack 23 has. The detected remaining power of the battery pack 23 may be stored by the second store device 72 of the hedge trimmer 31 in a data form, and is then controllably transmitted by the second source-based transceiver 62 to the data retrieval and/or process sub-system 30 such as a wrist-watch 33 for being displayed on the display unit or part of the wrist-watch 33.

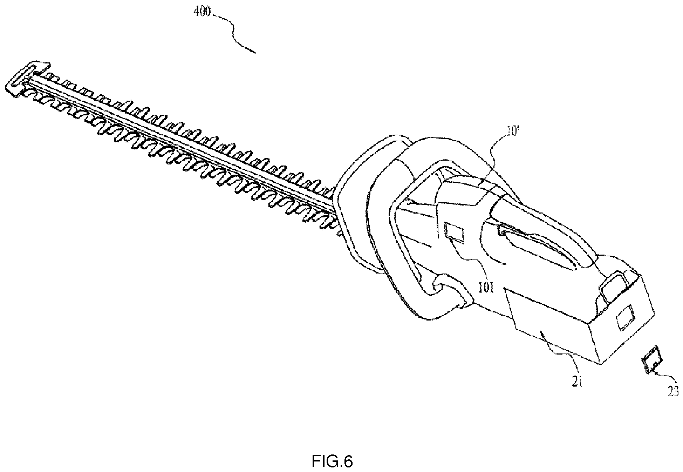

Fig. 6 to Fig. 8 depicts another power tool system 400. Different from the previous power tool system 100, 200 or 300, the present power tool system 400 includes a display unit or part 23 detachably attached to the battery pack 21 which detachably connects to the power tool, or detachably attached to the power tool 400 of Fig. 6. In an alternative embodiment, a display unit or part 23 configured to be detachably attached to the power device, and be further selectively removed away from the power device to a remote location as needed.

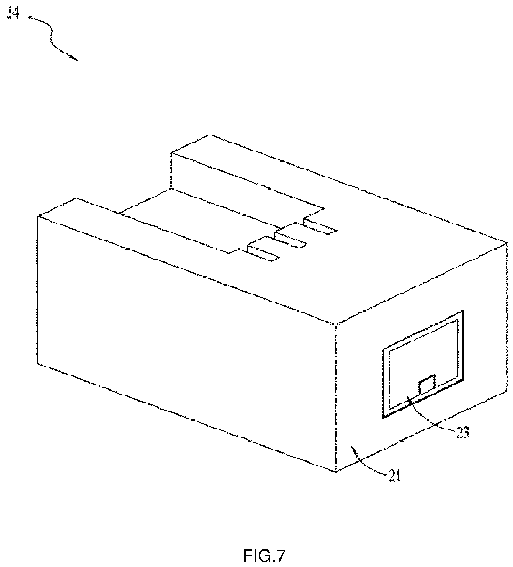

In a preferred embodiment of Fig. 7 to Fig. 9, the battery pack or the power device 21 is provided with a cabinet 213 thereof, the data display unit or part 23 is configured to be removably received within the cabinet 213 of the battery pack or the power device 21. In an alternative embodiment of Fig. 6, a cabinet 213 for receipt of the data display unit or part 23 is provided on the power tool 400, and the data display unit or part 23 is configured to be removably received within the cabinet of the power tool, and further to be selectively and removably captured by a user to a remote location, or to be selectively removed away from the power tool 400 to a remote location as needed.

It should be noted, the the wireless data retrieval and/or process sub-system may include a plurality of data display or process units or parts 23 on a select location which may be adjacent to the power tool or the power device, or remote from the power tool as needed.

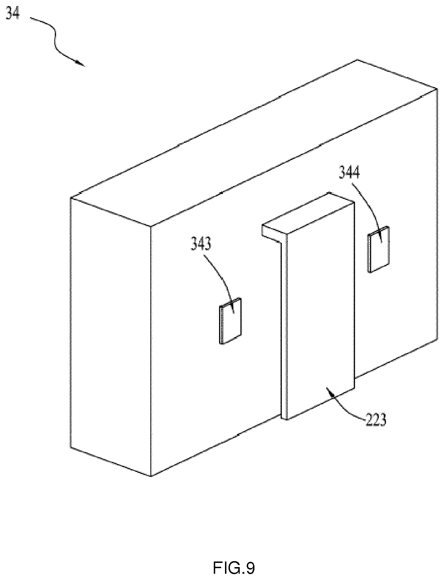

In Fig.9, the data display part 23 may be a part of a wear equipment 34 that can be detachably attached to the battery pack or the power device 21. In an embodiment, the wear equipment 34 can be in data linked with the the battery pack or the power device by the contact engagement of the first terminals 341, 342 of the power device and the second terminals 343, 344 of the the wear equipment 34. Alternatively, the battery pack and the wear equipment 34 have respective communication units for data transmission therebetween. Therefore, data corresponding to performance parameters of the battery pack or the power device 21 can be directly obtained and displayed by the data display part 23 of the wear equipment 34 in data linked to the battery pack or the power device 21 via a wireless or hardwired communication.

It is appreciated that the data retrieval and/or process sub-system may include a plurality of data display or process units in data linked to any one of the power devices or the power tools, so that a select data associated with the power devices or the power tools is controlled to be displayed or processed on a certain display or process unit which is adjacent to the power tool or remote from the power tool.

The above illustrates and describes basic principles, main features and advantages of the present invention. Those skilled in the art should appreciate that the above embodiments do not limit the present invention in any form. Technical solutions obtained by equivalent substitution or equivalent variations all fall within the scope of the present invention.

## Claims

1. A power tool system, comprising:
a power tool including a motor thereof;
a detection device for detecting performance parameters of said power tool;
a store device for storing data corresponding to performance parameters of the power tool;
a transceiver for transmitting data corresponding to performance parameters of the power tool;
a controller, capable of being in data communication with at least one of the detection device, the store device and the transceiver;
a wireless data retrieval and/or process sub-system adapted for receipt of data from the transceiver and/or transmission of control command to the transceiver;
wherein the wireless data retrieval and/or process sub-system includes a data process equipment independent of the power tool and configured to be remotely removed away from the power tool.

2. The system of claim 1, wherein the power tool includes a motor shaft driven by the motor and the detection device, the detection device includes a motor sensor for measuring a rotation state of the motor shaft as the motor rotates by the motor shaft, and the performance parameters as detected by the detection device includes a rotation speed, a rotation direction, a rotation angle of the driven motor shaft, and/or duration time that the rotate of motor shaft maintains.

3. The system of claim 1, wherein the power tool includes an identifier for generating an identification code corresponding to a select performance parameter of the power tool, the data process equipment can be configured to recognize the performance parameter by the identification code.

4. The system of claim 3, wherein the performance parameters as detected by the detection device include types of power tools, usage purposes of power tools, factory dates the power tools have, types of battery packs suitable for the associated power tools and/or the remaining power the battery pack has.

5. The system of claim 1, wherein the detection device includes a position sensor for sensing a position of the power tool relative to a select point, and monitoring position variables of the power tool, the performance parameters as detected include positions and/or position variables associated with the power tool.

6. The system of claim 1, wherein the controller is activated by the wireless data retrieval and/or process sub-system, and configured to enable the transceiver to transmit the data corresponding to positions of the power tool relative to a select point.

7. The system of claim 1,wherein the data process equipment is a device that can be in data transmission with an external equipment via a mobile network.

8. The system of claim 7,wherein the data process equipment is a mobile device in form of a handset or a computer.

9. The system of claim 8,wherein the data process equipment is configured to be in data communication with the transceiver via a select one from a group of Bluetooth, Zig Bee, Wi-Fi and NFC protocols.

10. A power tool system, comprising:
a power tool;
a power device for powering the power tool;
a detection device for detecting performance parameters of the power device;
a store device for storing data corresponding to performance parameters of the power device;
a source-based transceiver for at least transmitting data corresponding to performance parameters of the power device;
a controller, capable of being in data communication with at least one of the detection device, the store device and the transceiver;
a wireless data retrieval and/or process sub-system adapted for receipt of data from the transceiver and/or transmission of control command to the transceiver;
wherein the wireless data retrieval and/or process sub-system includes a data display equipment independent of the power tool and configured to be remotely removed away from the power tool.

11. The system of claim 10, wherein the wireless data retrieval and/or process sub-system include a data display part configured to be detachably attached to the power device or the power tool.

12. The system of claim 10, wherein the wireless data retrieval and/or process sub-system include a data display part configured to be detachably attached to the power device and selectively removed away from the power device to a remote location as needed.

13. The system of claim 11, wherein the power device is provided with a cabinet thereof, the data display part is configured to be removably received within the cabinet of the power device.

14. The system of claim 11, wherein the power tool includes the power device detachably attached thereto, the power device is provided with a cabinet on a wall thereof, the data display part is removably received within the cabinet of the power device.

15. The system of claim 10, wherein the power tool includes a housing thereof, at least one of the detection device, the store device, the source-based transceiver and the controller is disposed within the housing of the power tool.

16. The system of claim 10, wherein the power device includes a battery pack and a battery case for receiving the battery pack, at least one of the detection device, the source transceiver and the controller is disposed within the case of the power device.

17. The system of claim 10, wherein the data display equipment includes a display panel and a terminal transceiver at least for receipt of the data transmitted from the source-based transceiver, the terminal transceiver being in data communication with the source-based transceiver.
